(19) **Europäisches Patentamt European Patent Office Office européen des brevets**

(11) **EP 4 534 489 A1**

(12) **EUROPEAN PATENT APPLICATION**

(43) Date of publication:
09.04.2025 Bulletin 2025/15

(21) Application number: 24203997.2

(22) Date of filing: 01.10.2024

(51) International Patent Classification (IPC):
$C02F\ 1/52^{(2023.01)}$    $B01J\ 20/04^{(2006.01)}$
$C02F\ 1/66^{(2023.01)}$    $C02F\ 101/14^{(2006.01)}$
$C02F\ 103/34^{(2006.01)}$

(52) Cooperative Patent Classification (CPC):
**C02F 1/5236; B01J 20/048;** C02F 1/5245;
C02F 1/66; C02F 2101/14; C02F 2103/346

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 04.10.2023 TW 112138073

(71) Applicant: **Mega Union Technology Inc.**
**330 Taoyuan City (TW)**

(72) Inventors:
• **LIN, KUO-CHING**
**Taoyuan City (TW)**
• **SHIU, SHR-HAN**
**Taoyuan City (TW)**
• **LIN, HUNG-EN**
**Taoyuan City (TW)**
• **CHEN, YI-QING**
**Taoyuan City (TW)**

(74) Representative: **Schwerbrock, Florian**
**Hagenauer Strasse 1**
**10435 Berlin (DE)**

(54) **ADVANCED DEFLUORINATION AGENT AND METHOD FOR REMOVING FLUORINE-CONTAINING IONS IN WASTEWATER**

(57)    An advanced defluoridation agent and a method for removing fluoride ion in fluorine-containing wastewater are provided. The advanced defluoridation agent includes 40-70wt% of polyaluminum sulfate, 0.3-30wt% of hydroxyapatite and deionized water supplemented to 100wt%. Using the advanced defluoridation agent of the present disclosure to treat fluoride-containing wastewater can achieve increased defluorination efficiency, reduced electrical conductivity, and reduced sludge content, and a better defluorination effect. The concentration of fluoride ions is lower than 15ppm after using the advanced defluoridation agent of the present disclosure.

**Description**

BACKGROUND OF THE INVENTION

**1. FIELD OF THE INVENTION**

The invention relates to the field of fluoride-containing wastewater treatment, and particularly relates to an advanced defluorination agent that reduces the concentration and conductivity of fluoride ions in water.

**2. DESCRIPTION OF THE PRIOR ART**

Semiconductor industrial wastewater is industrial wastewater generated during the wafer production process. When producing wafers, semiconductor factories use a large amount of hydrofluoric acid to clean the wafer surface. In addition to hydrofluoric acid, other acids are also mixed with other substances, such as sulfuric acid, phosphoric acid, etc. In the manufacturing process of LCD panels and solar energy industries, high-concentration of hydrofluoric acid or mixed hydrofluoric acid is also used to clean TFT-LCD panels or solar silicon wafers. The pollutants contained in semiconductor industrial wastewater are mainly fluoride and the like.

Traditional methods for treating fluoride-containing wastewater are roughly divided into three types in industry: chemical precipitation, flocculation and precipitation, and adsorption. Among all, chemical precipitation is the most commonly used in industry and has great economic benefits. In General, the calcium salt precipitation method is used for high-concentration fluoride-containing industrial wastewater, i.e., calcium salts such as calcium chloride or calcium hydroxide are added to the industrial wastewater, so that the fluoride ions of the wastewater react with the calcium ions provided by the chemicals to form a calcium fluoride precipitation, thereby removing fluoride ions from the wastewater. Although the chemical precipitation method is simple in process, easy to handle, and requires little equipment, it may cause other negative effects, such as excessive concentrations of chloride ions and calcium ions in the discharged water.

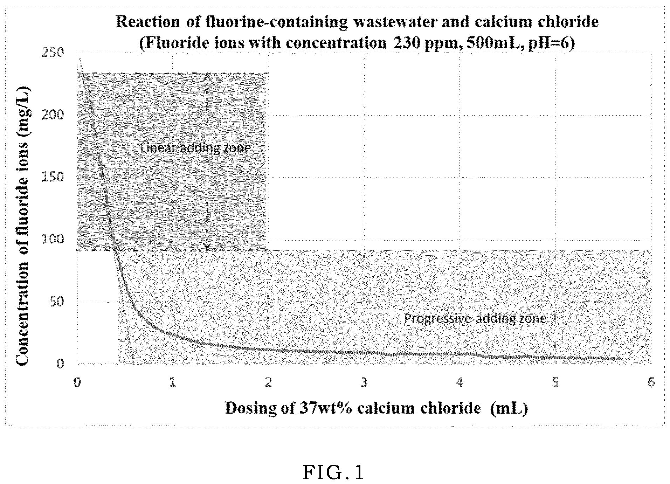

Please refer to FIG. 1, which is a comparison chart of the concentrations of fluoride ions and calcium chloride in fluoride-containing wastewater treated by chemical precipitation. The traditional chemical precipitation method uses calcium salts such as calcium chloride or calcium hydroxide to put into fluoride-containing wastewater to react fluoride ions and calcium ions in the wastewater to form calcium fluoride. However, in the condition of only calcium salts being used to remove fluorine, the defluoridation efficiency will significantly drop when the concentration reaches 50 ppm, which will cause problems such as excessive dosage and increased costs. Therefore, it is necessary to add excessive amounts of calcium chloride to reduce the concentration of fluoride ions in the wastewater to less than 15 ppm, in order to meet discharge water standards. It results in increased costs, consumption of a majority of an amount of calcium chloride, and environmental pollution. In addition, adding excessive calcium chloride will increase the chloride ion content and conductivity of the discharge water, and will also increase the amount of sludge produced.fluoride-containingfluoride-containingFIG. 1FIG. 1

Fluoride is difficult to decompose in the natural. As the carrying capacity of environment for fluoride is getting lower, the standard for the concentration of fluoride ions in discharged water are become stricter. The current regulation of discharge water stipulated by the Environmental Protection Agency is $\leqq$ 15ppm. In addition, there are certain regulations for the conductivity of agricultural irrigation water, which need to be $\leqq$ 750 $\mu$s/cm. Therefore, the present disclosure has developed an advanced defluoridation agent in order to overcome the difficulties and deficiencies of the conventional technology and solve the problems faced by the industry.

SUMMARY OF THE INVENTION

In view of the foregoing, the present disclosure provides an advanced defluoridation agent. The advanced defluoridation agent is used to treat the fluoride-containing wastewater, The speed of removing fluoride ions is fast, and has a good result in removal of fluoride ion in the low concentration. It can reduce the amount of calcium chloride usage, thereby reducing the conductivity of the treated fluoride wastewater and the concentration of the chloride ions in the discharge water. Improving the defluoridation efficiency in the fluoride wastewater to meet the standards of fluoride wastewater and increase recyclability and reusability.

In order to solve the above problem, the present disclosure provides fluoride-containingan advanced defluorination agent for removing Fluoride ion in fluoride-containing wastewater. The advanced defluorination agent includes 40-70wt% of polyaluminum sulfate, 0.3-30wt% of hydroxyapatite and deionized water supplemented to 100wt%.

Preferably, an alumina content of the polymerized aluminum sulfate is 15-20wt%.

Preferably, the advanced defluoridation agent includes: 40wt%-70wt% of polyaluminum sulfate, 5wt%-6.5wt% of polyaluminum chloride, and 5wt%-30wt% of hydroxyapatite, 1wt% of polyferric sulfate, 1wt% of calcium sulfate, 1wt% of nano-aluminum, 1wt% of nano-iron, 1wt% of nano-calcium, and deionized water supplemented to 100wt%.

Preferably, the iron oxide content of the polymerized iron sulfate is 0.2-0.8wt%.

Preferably, a mass fraction of a total iron content of the polyferric sulfate is 10-20%.

Preferably, a defluoridation efficiency of the advanced defluoridation agent is90.4-99.7%.

Preferably, a reduction ratio of a conductivity of the fluoride-containing wastewater treated by the advanced defluoridation agent ranges from 38.3-57%.

Preferably, a reduction ratio of a concentration of chloride ions of the fluoride-containing wastewater treated by the advanced defluoridation agent ranges from 33.4-80.9%.

The present disclosure further provides a method for removing fluoride ions in fluoride-containing wastewater, including the following:

dissolving the advanced defluoridation agent of claim 1 in deionized water, wherein a mixing ratio of the advanced defluoridation agent and the deionized water is 1:5-50 to prepare an advanced defluoridation agent solution having a concentration of 5%-50% by weight;

adjusting the fluoride-containing wastewater with liquid caustic soda to a pH value of 6-8; and

adding the advanced defluoridation agent solution to the pH-adjusted fluoride-containing wastewater and stir to react.

Preferably, a stirring time is 5-15 minutes, and a defluoridation efficiency of the advanced defluoridation agent is 89.3-99.7% after the stirring.

Preferably, a reduction ratio of a concentration of the chloride ions of the fluoride-containing wastewater treated by the advanced defluoridation agent ranges from 33.4-80.9%.

As can be seen from the above description, the present disclosure has the following advantages:

The present disclosure provides an advanced defluoridation agent (also known as MU-RF501) by selecting suitable weight percentage concentration of components. Whether the fluoride removal agent of the present disclosure is used to react with high concentration ($\geqq$ 1000ppm) or low concentration ($\leqq$ 50ppm), more than 99% of fluoride ions can be removed by just stirring for 10 minutes.

BRIEF DESCRIPTION OF THE DRAWINGS

Implementations of the present disclosure will now be described, by way of embodiment, with reference to the attached figures.

FIG. 1 is a comparison chart of the concentrations of fluoride ions and calcium chloride in fluoride-containing wastewater treated by chemical precipitation method.

FIG. 2 is a comparison chart of concentration of the chloride ions after treatment of fluoride-containing wastewater using chemical precipitation method and the advanced defluorination agent of the present disclosure.

DESCRIPTION OF THE PREFERRED EMBODIMENT

Reference will now be made in detail to representative embodiments illustrated in the accompanying drawings. It should be understood that the following descriptions are not intended to limit the embodiments to one preferred embodiment. To the contrary, it is intended to cover alternatives, modifications, and equivalents, as can be included within the spirit and scope of the described embodiments, as defined by the appended claims. Thereinafter, the implementation disclosure and the related embodiment will be described to illustrate the characteristics of the present disclosure. However, the embodiment well known by the persons skilled in that art may not be specifically described in the specification.

Embodiment 1: Source of fluoride-containing wastewater.

The fluoride-containing wastewater is industrial wastewater taken from the semiconductor factory, which is served as the fluoride-containing wastewater to be treated. The pH value of the fluoride-containing wastewater to be treated is 3-4, the concentration of fluoride ions is 100-1000ppm, and the concentration of the chloride ions is 5-60ppm, the conductivity is 1-3ms/cm.

Embodiment 2: Preparation of advanced defluoridation agent.

Table 1 shows the composition and proportions of the advanced defluoridation agent of the present disclosure. The components are uniformly mixed according to the composition of table 1. In order to determine the efficiency differences of different proportions of the advanced defluoridation agent of the present disclosure, the Experimental example 1 and Comparative example 1 to 6 of advanced defluoridation agent are made in order to determine efficiency of different ratios, as shown in Table 1.

Table 1

| | Experimental example1 | Comparative example1 | Comparative example2 | Comparative example3 | Comparative example4 | Comparative example5 | Comparative example6 |
|---|---|---|---|---|---|---|---|
| Polyaluminum sulfate | 40 wt% | 70 wt% | 40 wt% | 40 wt% | 40 wt% | 40 wt% | 40 wt% |
| Polyaluminum chloride | 6 wt% | 0 wt% | 0 wt% | 6.5 wt% | 6 wt% | 5 wt% | 5.5 wt% |
| Hydroxyapatite | 10 wt% | 0.7 wt% | 0.3 wt% | 30 wt% | 20 wt% | 15 wt% | 5 wt% |
| Polyferric sulfate | 1 wt% | 0 wt% | 0 wt% | 1 wt% | 1 wt% | 1 wt% | 1 wt% |
| Nano-aluminum | 1 wt% | 0 wt% | 0 wt% | 1 wt% | 1 wt% | 1 wt% | 1 wt% |
| Nano-iron | 1 wt% | 0 wt% | 0 wt% | 1 wt% | 1 wt% | 1 wt% | 1 wt% |
| Nano-calcium | 1 wt% | 0 wt% | 0 wt% | 1 wt% | 1 wt% | 1 wt% | 1 wt% |
| deionized water | 40.0 wt% | 29.3 wt% | 59.7 wt% | 19.5 wt% | 30.0 wt% | 36.0 wt% | 45.5 wt% |

The main function of polyaluminum sulfate and polyferric sulfate is to remove fluoride ions and flocculating from fluoride-containing wastewater. In addition, the matrix of polyaluminum sulfate and polyferric sulfate is sulfate ions. The solubility of polyaluminum sulfate and polyferric sulfate in water is the same as the solubility of sulfuric acid in water. Therefore, the dissolution efficiency of polyaluminum sulfate and polyferric sulfate in water synergistically increases the reactivity with fluoride ions and increases the removal of fluoride ions.

The content of alumina in polyaluminum sulfate ranges from 15-20wt%, preferably 15.8wt%. The content of iron oxide in polyferric sulfate ranges from 0.2-0.8wt%, preferably 0.2wt%. The total iron content (calculated as $Fe^{3+}$) of the polyferric sulfate is 10-20wt%, preferably 19wt%.

The main functions of polyaluminum chloride are flocculation and removal of fluoride ions.

The mixing ratio of the advanced defluoridation agent and wastewater of the present disclosure is 1:150-1000. When the hydroxyapatite of the advanced defluorination agent reacts with the fluoride-containing wastewater, the $OH^-$ ions of the hydroxyapatite react with the fluoride ions of the fluoride-containing wastewater to achieve ion exchange effect. At the same time, hydroxyapatite can adsorb fluoride ions. Therefore, hydroxyapatite can remove fluoride ions in two ways: ion exchange and adsorption, which can shorten the removal reaction time and stirring time. The chemical reaction formula of ion exchange effect is: $Ca_{10}(PO_4)_6(OH)_2 + 2F^- \rightarrow Ca_{10}(PO_4)_6F_2 + 2OH^-$.-. Therefore, the removal rate and removal effect of fluoride ions are increased. In addition, the OH-ions of hydroxyapatite enter the wastewater after being subject to ion exchange, which can maintain the pH value of the wastewater to pH 6-8 and reduce the amount of liquid caustic soda (sodium hydroxide) being used. Preferably, the pH value of the fluoride-containing wastewater is adjusted to 6 (weakly acidic).

Embodiment 3: Determination of defluoridation efficiency of the advanced defluoridation agent.

The advanced defluorination agent and deionized water are mixed at a ratio of 1:5-50 to prepare a advanced defluorination agent solution having a concentration of 5wt% to 50wt%. The dilution ratio can be adjusted according to needs or not diluted, and the present disclosure is not limited thereto.

In the present embodiment 3, the advanced defluorination agent prepared in embodiment 2 is prepared in deionized water to a solution with a concentration of 40% by weight, and is added to the fluoride-containing wastewater to be treated prepared in embodiment 1.

500 mL of fluoride-containing wastewater to be treated is added in each of the seven beakers. Those skilled in the art can measure the pH value by the existing method, and adjust the pH value of the fluoride-containing wastewater to 6-8 with sodium hydroxide (liquid caustic soda). 0.4-1.6 mL of 37wt% calcium chloride are added as pretreatment. In the present embodiment, 0.5-2.9 mL of advanced defluorination agent prepared according to embodiment2 are added and stirred for 1, 5, 10, and 15 minutes, then let it stand for 5 minutes. The supernatant is extracted to detect the final concentration of fluoride ions using a fluorine electrode. The fluoride ion detection method was based on the "Fluoride Salt Detection Method in Water - Fluorine Selective Electrode Method" (NIEA W413.52A). The results are shown in Table 2.

Table 2

| Reaction time | Defluoridation efficiency (%) | | | | Final concentration of fluoride ion (ppm) |
|---|---|---|---|---|---|
| | 1min | 5min | 10min | 15min | |
| Experimental example 1 | 60.1 | 89.3 | 99.5 | 99.7 | 9.5 |
| Comparative example 1 | 58.4 | 80.1 | 83.2 | 97.0 | 11.6 |
| Comparative example 2 | 57.9 | 82.5 | 85.4 | 96.5 | 13.4 |
| Comparative example 3 | 42.5 | 53.6 | 85.6 | 90.5 | 12.0 |
| Comparative example 4 | 40.6 | 48.9 | 84.3 | 91.3 | 10.8 |
| Comparative example 5 | 36.7 | 45.8 | 86.1 | 92.8 | 12.9 |
| Comparative example 6 | 32.8 | 40.7 | 84.4 | 90.4 | 12.7 |

As shown in Table 2, after treating the fluoride-containing wastewater using the advanced defluoridation agent Embodiment 1, the concentration of fluoride ions is reduced to 9.5-13.4 ppm, and the defluoridation efficiency is 90.4-99.7%. The advanced defluoridation agent of Experimental example 1 has the best defluoridation efficiency and the lowest concentration of fluoride ions, which overcomes the limit of defluoridation efficiency of the traditional chemical precipitation method as shown in FIG. 1, and effectively achieve the effect of reducing the concentration of fluoride ions in fluoride-containing wastewater using the least reagents, thereby solving the technical problem of adding excess calcium chloride in the traditional chemical precipitation method, reducing costs, and avoiding the problem of new chemical pollution.

Accordingly, the advanced defluoridation agent of the present disclosure does meet the requirements that the low-concentration fluoride-containing wastewater discharge must be less than 15 ppm, such as "Water Discharge Standard" (Regulation No. 1080028628 released by Taiwan Food and Environmental Hygiene Department).

Embodiment 4: Determination of conductivity of fluoride-containing wastewater treated with advanced defluoridation agent.

The supernatant of the fluoride-containing wastewater in Example 3 is extracted and treated with an advanced defluorination agent for 15 minutes. The conductivity of the supernatant is measured using a conductivity meter. The measuring method for conductivity refers to "Measuring Method of Conductivity in Water - Conductivity Meter" (NIEA W203.51B). The present embodiment is compared with the traditional chemical precipitation method (i.e., adding only 3 grams of calcium chloride). The original conductivity of the fluoride-containing wastewater of embodiment 1 is 2.65ms/cm.

Table 3

| | Traditional chemical precipitation method | Exp. example 1 | Comp. example 1 | Comp. example 2 | Comp. example 3 | Comp. example 4 | Comp. example 5 | Comp. example 6 |
|---|---|---|---|---|---|---|---|---|
| Conductivity (ms/cm) | 4.95 | 3.63 | 4.01 | 4.26 | 3.65 | 3.79 | 3.99 | 4.07 |
| Reduction ratio (%) | --- | 57.0 | 50.8 | 47.7 | 56.0 | 50.4 | 41.7 | 38.3 |

As shown in Table 3, the advanced defluoridation agent of the present disclosure only increases the conductivity of fluoride-containing wastewater to 3.63~4.07ms/cm. Compared with the traditional chemical precipitation method, the reduction ratio is 38.3-57.0%. The calculation formula is as shown in Mathematical formula 1. The advanced defluoridation agent of Experimental example 1 has the best effect, with the smallest increase in conductivity and the highest reduction ratio.

$$\text{Reduction ratio}(\%) = \frac{\text{conductivity}_{\substack{\text{traditional chemical} \\ \text{precipitation method}}} - \text{conductivity}_{\text{Example}}}{\text{conductivity}_{\substack{\text{traditional chemical} \\ \text{precipitation method}}} - \text{conductivity}_{\substack{\text{original} \\ \text{wastewater}}}} \times 100\%$$

Mathematical formula 1

Embodiment 5: Determination of concentration of the chloride ions in fluoride-containing wastewater treated by advanced defluoridation agent.

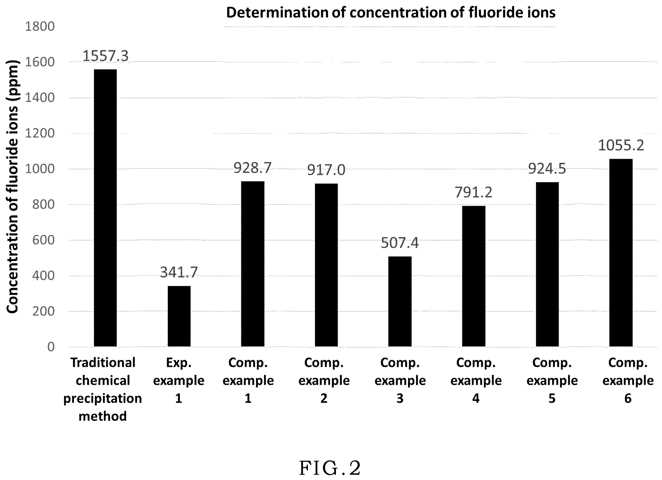

The supernatant from the fluoride-containing wastewater of embodiment which is treated by advanced defluoridation agent of the present disclosure for 15 minutes is extracted. The measuring method of chloride ions refers to "Method for Detection of Chloride Salt in Water" (NIEA W407.51C), and is compared with the traditional chemical precipitation method (3 grams of calcium chloride is added). The initial concentration of chloride ionsof the fluoride-containing wastewater in the present embodiment is 55.2 ppm. The results are shown in FIG. 2 and Table 4.

Table 4

| | Traditional chemical precipitation method | Experimental example1 | Comparative example1 | Comparative example2 | Comparative example3 | Comparative example4 | Comparative example5 | Comparative example6 |
|---|---|---|---|---|---|---|---|---|
| Concentration of the chloride ions (ppm) | 1557.3 | 341.7 | 928.7 | 917.0 | 507.4 | 791.2 | 924.5 | 1055.2 |
| Reduction ratio (%) | --- | 80.9 | 40.4 | 41.1 | 69.9 | 51.0 | 42.0 | 33.4 |

As shown in FIG. 2 and Table 4, after using chemical precipitation to treat fluoride-containing wastewater, the concentration of the chloride ions in the fluoride-containing wastewater is as high as 1557.3ppm. On the contrary, after using the advanced defluoridation agent of Experimental Example 1 and Comparative Examples 1 to 4 of the present disclosure to treat the fluoride-containing wastewater, the concentration of chloride ions of the fluoride-containing wastewater was only 341.7-1055.2 ppm. The reduction ratio was 33.4-80.9%. The advanced defluoridation agent in Experimental example 1 has the best effect.

This shows that while achieving better fluoride removal effect, the advanced defluoridation agent of the present disclosure can effectively reduce the conductivity of fluoride-containing wastewater and reduce the chloride ion content in the wastewater, and reduce the increases of sludge. Therefore, the advanced defluoridation agent of present disclosure has a synergistic effect, has environmental protection and economic benefits, and increases the recycling of wastewater after defluoridation.

**Claims**

1. An advanced defluorination agent for removing Fluoride ion in fluorine-containing wastewater, comprising: 40-70wt% of polyaluminum sulfate, 0.3-30wt% of hydroxyapatite and deionized water supplemented to 100wt%.

2. An advanced defluoridation agent according to claim 1, wherein an alumina content of the polymerized aluminum sulfate is 15-20wt%.

3. An advanced defluoridation agent according to claim 1, wherein the advanced defluoridation agent comprises: 40wt%-70wt% of polyaluminum sulfate, 5wt%-6.5wt% of polyaluminum chloride, and 5wt%-30wt% of hydroxyapatite, 1wt% of polyferric sulfate, 1wt% of calcium sulfate, 1wt% of nano-aluminum, 1wt% of nano-iron, 1wt% of nano-calcium, and deionized water supplemented to 100wt%.

4. An advanced defluoridation agent according to claim 3, wherein a mass fraction of a total iron content of the polyferric sulfate is 10-20%.

5. The advanced defluorination agent according to claim 1, wherein a defluoridation efficiency of the advanced defluoridation agent isdefluoridation efficiency90.4-99.7%.

6. An advanced defluoridation agent according to claim 1, wherein a reduction ratio of a conductivity of the fluoride-containing wastewater treated by the advanced defluoridation agent ranges from 38.3-57%.

7. An advanced defluoridation agent according to claim 1, wherein a reduction ratio of a concentration of chloride ions of the fluoride-containing wastewater treated by the advanced defluoridation agent ranges from 33.4-80.9%.

8. A method for removing fluoride ions in fluoride-containing wastewater, comprising:

    dissolving the advanced defluoridation agent of claim 1 in deionized water, wherein a mixing ratio of the advanced defluoridation agent and the deionized water is 1:5-50 to prepare an advanced defluoridation agent solution having a concentration of 5%-50% by weight;
    adjusting the fluoride-containing wastewater with liquid caustic soda to a pH value of 6-8; and
    adding the advanced defluoridation agent solution to the pH-adjusted fluoride-containing wastewater and stir to react.

9. The method according to claim 8, wherein a stirring time is 5-15 minutes, and a defluoridation efficiency of the advanced defluoridation agent is 89.3-99.7% after the stirring.

10. The method according to claim 8, wherein a reduction ratio of a concentration of the chloride ions of the fluoride-containing wastewater treated by the advanced defluoridation agent ranges from 33.4-80.9%.

**Reaction of fluorine-containing wastewater and calcium chloride (Fluoride ions with concentration 230 ppm, 500mL, pH=6)**

Linear adding zone

Progressive adding zone

Concentration of fluoride ions (mg/L)

Dosing of 37wt% calcium chloride (mL)

FIG.1

**Determination of concentration of fluoride ions**

FIG.2

Europäisches
Patentamt

European
Patent Office

Office européen
des brevets

# EUROPEAN SEARCH REPORT

**Application Number**

EP 24 20 3997

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 110 054 275 A (SHANDONG HUANRUI ECOLOGY TECH CO LTD) 26 July 2019 (2019-07-26) * claims 1,4,5 * | 1-10 | INV. C02F1/52 B01J20/04 |
| A | CN 113 526 639 A (BEIJING GAIA ENVIRONMENTAL TECH CO LTD ET AL.) 22 October 2021 (2021-10-22) * the whole document * | 1-10 | ADD. C02F1/66 C02F101/14 C02F103/34 |
| A | CN 114 262 093 B (HUA SUMMER WATER ENVIRONMENT FRIENDLY SCIENCE AND TECH LIMITED COMPANY) 18 April 2023 (2023-04-18) * the whole document * | 1-10 | |
| A | DAS S. K. ET AL: "An evolving perspective on the fluoride mitigation techniques", INTERNATIONAL JOURNAL OF ENVIRONMENTAL SCIENCE AND TECHNOLOGY, [Online] vol. 20, no. 10, 22 November 2022 (2022-11-22), pages 11777-11808, XP093222528, IR ISSN: 1735-1472, DOI: 10.1007/s13762-022-04576-z Retrieved from the Internet: URL:https://link.springer.com/article/10.1007/s13762-022-04576-z/fulltext.html> [retrieved on 2024-11-08] * the whole document * | 1-10 | TECHNICAL FIELDS SEARCHED (IPC) C02F B01J |

The present search report has been drawn up for all claims

| Place of search | Date of completion of the search | Examiner |
|---|---|---|
| The Hague | 11 November 2024 | Liebig, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 534 489 A1**

## ANNEX TO THE EUROPEAN SEARCH REPORT
## ON EUROPEAN PATENT APPLICATION NO.

EP 24 20 3997

This annex lists the patent family members relating to the patent documents cited in the above-mentioned European search report.
The members are as contained in the European Patent Office EDP file on
The European Patent Office is in no way liable for these particulars which are merely given for the purpose of information.

11-11-2024

| Patent document cited in search report | | Publication date | Patent family member(s) | Publication date |
|---|---|---|---|---|
| CN 110054275 | A | 26-07-2019 | NONE | |
| CN 113526639 | A | 22-10-2021 | NONE | |
| CN 114262093 | B | 18-04-2023 | NONE | |

EPO FORM P0459

For more details about this annex : see Official Journal of the European Patent Office, No. 12/82

13